# EUROPEAN PATENT APPLICATION

(11) **EP 3 454 245 A1**
(43) Date of publication of application: **13.03.2019**
(21) Application number: 17306172.2
(22) Date of filing: 12.09.2017
(51) Int. Cl.: G06F 21/51, G06F 9/4401, G06F 21/57

(54) **A FIRST COMMUNICATION DEVICE CONFIGURED TO COMMUNICATE USING A SHORT RANGE WIRELESS INTERFACE WITH A SECOND COMMUNICATION DEVICE FOR UNLOCKING A BOOT SEQUENCE**

(71) Applicant: GEMALTO SA, 92190 Meudon (FR)
(72) Inventor: BERNABEU, Gil, 92190 Meudon (FR)
(74) Representative: Cassagne, Philippe M.J.

(57) **Abstract**

This invention relates to a first communication device (201) configured to communicate using a short range wireless interface (216) with a secure enclave (211) embedded in a second communication device (200), the second communication device (200) further comprising a main processor (210) adapted to execute at least a portion of a boot sequence (214), said secure enclave (211) implementing a boot application (215) configured to lock at least one portion of a boot sequence (214) of the second communication device (200) such that it cannot be executed when an electronic signature derived from the at least one portion is not matching with a reference electronic signature memorised by the secure enclave (211) and associated to said at least one portion, wherein the first communication device is further configured to establish (302) with the secure enclave (211) a secure communication channel, receive audit data from the secure enclave (211) in order to verify if at least one portion of the boot sequence is locked; transmit to the secure enclave (211) a message for unlocking the at least one locked portion of the boot sequence.

## Description

### TECHNICAL FIELD

The present invention relates to first communication device and a second communication device configured for the first communication device to unlock at least a portion of a boot sequence to be executed by the second communication device. It is applicable to the embedded systems comprising mechanism to lock a boot sequence.

### BACKGROUND OF THE INVENTION

According to the Recommendation ITU-T Y.2060 provided by the International Telecommunication institute, the Internet of things (loT) is defined as a global infrastructure for the information society, enabling advanced services by interconnecting physical and virtual things based on existing and evolving interoperable information and communication technologies. A thing is an object of the physical world (physical things) or the information world (virtual things), which is capable of being identified and integrated into communication networks. At present, loT is generally applied in fields such as security surveillance, automatic vending machines, public traffic systems, vehicle monitoring and management, industry process automatization, motor machineries, city informationalization.

In this description, the expression communication device refers to a piece of equipment with communication capabilities and optionally capacity of data capture, sensing, data storage, sensing and/or data processing. A communication device comprises for example a wireless communication module also called Machine Type Communication (MTC) module allowing transmission of data from one loT device to another or exchange of data between machines through UMTS/HSDPA, CDMA/EVDO, LTE, 5G, LoRa or other networks.

Security concerns are seriously considered for the loT market as attacks are regularly reported on these devices, such as Distributed Denial of Service (DDoS) attacks. A simple security mechanism to protect the device is the secure boot. A boot sequence generally defines which software layers are started and in which sequence. As an example, in an Android (trademark) device, the boot ROM code starts and loads a boot loader. The boot loader then initializes some hardware and memory and the Android kernel is executed.

In a secure boot solution, if the boot sequence is not performed correctly with the correct sequence or if the signature of one of the software is different from the one expected, the boot process is canceled. This is to protect a device to run with an altered boot sequence.

This may be requested in critical environment where the user prefers to loose part of the network if a computer or gateway is infected rather than taking the risk to allow a rogue device to enter the network.

Unlocking and maintenance of blocked devices for which the operating system could not be launched is difficult for the device owner or operator as remote management is not possible. Further, the device can be switch off without any active power source.

### SUMMARY OF THE INVENTION

The invention relates to a first communication device configured to communicate using a short range wireless interface with a secure enclave embedded in a second communication device, the second communication device further comprising a main processor adapted to execute at least a portion of a boot sequence, said secure enclave implementing a boot application configured to lock at least one portion of a boot sequence of the second communication device such that it cannot be executed when an electronic signature derived from the at least one portion is not matching with a reference electronic signature memorised by the secure enclave and associated to said at least one portion.

The first communication device is further configured to:
- establish with the secure enclave a secure communication channel in order to exchange data with the boot application;
- receive audit data from the secure enclave using said secure communication channel in order to verify if at least one portion of the boot sequence is locked;
- transmit to the secure enclave a message for unlocking the at least one locked portion of the boot sequence, the message being taken into account by the secure enclave by replacing the reference electronic signature memorized by the secure enclave by a newly generated digital signature derived from the at least one portion of the boot sequence.

According to an example, the first communication device is configured to power the secure enclave using said wireless short-range interface.

According to an example, the first communication device is configured to be authenticated by the secure enclave as authorized for unlocking at least a portion of the boot sequence of the second communication device.

According to an example, the first communication device is configured to unlock one or several portions of the boot sequence when the boot sequence comprises a plurality of portions that are each associated to a distinct reference electronic signature.

According to an example, the first communication device is configured to communicate with a remote server, the remote server providing to the first communication device an authorization to unlock one or several portions of the boot sequence, the unlocking of a portion of the boot sequence by the first communication device being impossible without the authorization.

According to an example, audit data collected from the secure enclave are transferred to the remote server for it to decide if an authorization can be granted or not.

The invention also relates to a secure enclave configured to be embedded in a second communication device and to communicate using a short range wireless interface with a first communication device, the second communication device further comprising a main processor adapted to execute at least a portion of a boot sequence, said secure enclave implementing a boot application configured to lock at least one portion of a boot sequence of the second communication device such that it cannot be executed when an electronic signature derived from the at least one portion is not matching with a reference electronic signature memorised by the secure enclave and associated to said at least one portion.

The secure enclave is further configured to:
- establish a secure communication channel in order to exchange data between the first communication device and the boot application;
- transmit to the first communication device using said secure communication channel audit data indicating if at least one portion of the boot sequence is locked;
- receive from the first communication device a message for unlocking the at least one locked portion of the boot sequence, the message being taken into account by the secure enclave by replacing the reference electronic signature memorized by the secure enclave by a newly generated digital signature derived from the at least one portion of the boot sequence.

According to an example, the secure enclave embeds an antenna adapted to implement the short range wireless interface.

According to an example, the secure enclave is configured to memorize for each portion of code composing the boot sequence a data item representative of its criticality in order to show at least two levels of criticality, the first level corresponding to a high level of criticality and the second level to a low level of criticality.

According to an example, the secure enclave is configured such that if a given portion of the boot sequence associated a high level of criticality is locked, the whole boot sequence is locked.

According to an example, the secure enclave is configured such that if a given portion of the boot sequence associated a low level of criticality is locked, the other portions of the boot sequence can still be executed if those are unlocked.

According to an example, the audit data comprises, in addition to an information indicating if at least one portion of the boot sequence is locked, additional information among which the time or date at which a given portion of the boot sequence has been locked.

According to an example, the secure enclave is configured to be powered by the secure enclave using said wireless short-range interface.

According to an example, the secure enclave is configured to authenticate the first communication device as authorized for unlocking at least a portion of the boot sequence of the second communication device.

The invention also relates to a method for unlocking the boor sequence of a second communication device by a first communication device, the first communication device being configured to communicate using a short range wireless interface with a secure enclave embedded in the second communication device, the second communication device further comprising a main processor adapted to execute at least a portion of a boot sequence, said secure enclave implementing a boot application configured to lock at least one portion of a boot sequence of the second communication device such that it cannot be executed when an electronic signature derived from the at least one portion is not matching with a reference electronic signature memorised by the secure enclave and associated to said at least one portion. The method comprises the steps of:
- establishing with the secure enclave a secure communication channel in order to exchange data with the boot application;
- receiving audit data from the secure enclave using said secure communication channel in order to verify if at least one portion of the boot sequence is locked;
- transmitting to the secure enclave a message for unlocking the at least one locked portion of the boot sequence, the message being taken into account by the secure enclave by replacing the reference electronic signature memorized by the secure enclave by a newly generated digital signature derived from the at least one portion of the boot sequence.

According to an example, the method comprises the step of receiving from a remote server an authorization to unlock one or several portions of the boot sequence, the unlocking of a portion of the boot sequence by the first communication device being impossible without said authorization.

The invention also relates to a computer program product comprising instructions which, when the program is executed by a computer, causes the computer to carry out the steps of the method described above.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 provides an example of technology allowing to lock at least partially the boot process engaged by a communication device at power on;
- Figure 2 schematically represents a second communication device with a locked boot sequence and a first communication device that is used for the purpose of unlocking;
- Figure 3 provides a diagram showing the steps for implementing a mechanism to unlock at least a portion of a boot sequence;
- Figure 4A is a simplified example of a sequence diagram in which a first communication device communicates with a secure enclave embedded in a second communication device in order to unlock a boot sequence;
- Figure 4B provides another example of a sequence diagram in which second communication device communicates with a secure enclave embedded in a first communication device in order to unlock a boot sequence.

### DETAILED DESCRIPTION

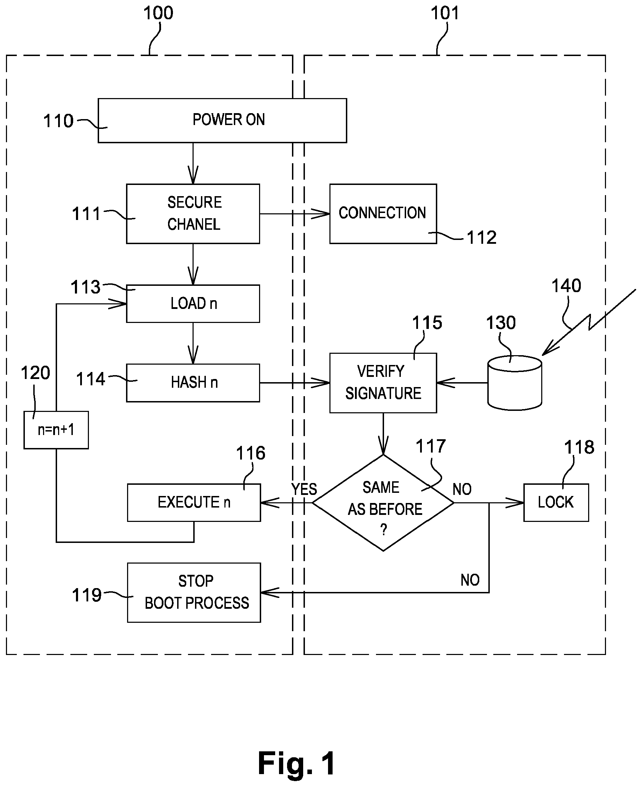

**Figure 1** provides an example of technology allowing to lock at least partially the boot process engaged by a communication device at power on.

In this example, the communication device comprises a main processor 100 aiming at executing the different applications providing the services required by the user of the device. It also comprises a secure enclave 101. Figure 1 is simplified such that the sharing of the various processes involved for implementing the boot locking mechanism appears clearly.

In this description, a secure enclave refers to a secure area that is adapted to store data and to protect their integrity and confidentiality and comprising a set of at least one hardware and/or software components. This secure enclave can be implemented for example into a processor in the form of a Trusted Execution Environment (TEE) or as a secure element or integrated in a System-on-Chip (SoC).

At first, the communication device is switched on 110. This leads the main processor to request 111 the establishment of a secure channel with the secure enclave. At the end of this process, a connection 112 is established between the main processor 100 and the secure enclave 101.

In this description, it is taken as a convention that the boot sequence to be executed by the main processor comprises N portion of the software to be executed. The following mechanism will then be iterated from n=1 to n=N.

The n-th portion of code is loaded 113 for example from a memory located outside of the main processor. Then, an electronic signature of the n-th portion of code is generated. Depending of the implementation, the generation of the electronic signature can be implemented by the main processor or by the secure enclave. In this example, the electronic signature is generated 114 by the main processor 100 and then transmitted to the secure enclave 101. This is for exemplary purpose only and it also possible to first transmit the n-th portion of code to the secure enclave for it to generate locally the aforementioned electronic signature.

In this description, an electronic signature is a digest of a message characterising the data with a low risk of error in view of the level of a required integrity level. In the scope of this invention, the message corresponds to the n-th portion of the boot sequence.

The electronic signature can be obtained by using a check sum calculated from the message itself as the signing algorithm, for example parity or a CRC (Cyclic Redundancy Code).

Alternatively, the electronic signature can be of the cryptographic type, an image of the message obtained by using a signing algorithm such as MD5 (Message Digest 5), SHA-1 (Secure Hash Algorithm 1), SHA-256 (Secure Hash Algorithm 256) or SHA-512 (Secure Hash Algorithm 512).

The electronic signature can also be an authenticated digest, that is to say a cryptographic digest that takes account of a secret element, in addition to the data of which it is a check sum. For example, the authenticated digest may be of the HMAC type (keyed-Hash Message Authentication Code). That authenticated digest is calculated using a cryptographic hashing function in combination with a secret key.

RSA (Rivest Shamir Adleman) or DSA (Electronic signature Algorithm) can also be used as a signing algorithm to generate the electronic signature.

In another step, the electronic signature is verified 115 by the secure enclave 101. For example, the secure enclave comprises a secure memory 130 containing a set of N electronic signatures used as references and respectively associated to the N portions of code comprised in the boot sequence.

These reference electronic signatures are generally referred as golden measurements.

For the n-th portion of code, the newly generated electronic signature is compared with the appropriate reference electronic signature. Depending 117 of the result, the boot sequence can be locked 118 or executed in a normal way 116.

More precisely, if the reference electronic signature differs from the newly generated electronic signature, the golden measurement is not correctly verified and one or several portions of the boot sequence can be locked 118 by the secure enclave, leading for example to the interruption of the boot sequence. A locked portion is a portion of the boot sequence that cannot be executed.

On the contrary, if the reference electronic signature is the same as the newly generated electronic signature, the n-th portion of code is executed 116 and the next portion of code 120 is then processed in the same way.

One important aspect of the invention is that a second communication device can be used to reinitialize one or several reference electronic signatures 140, that is to say one or several golden measurements.

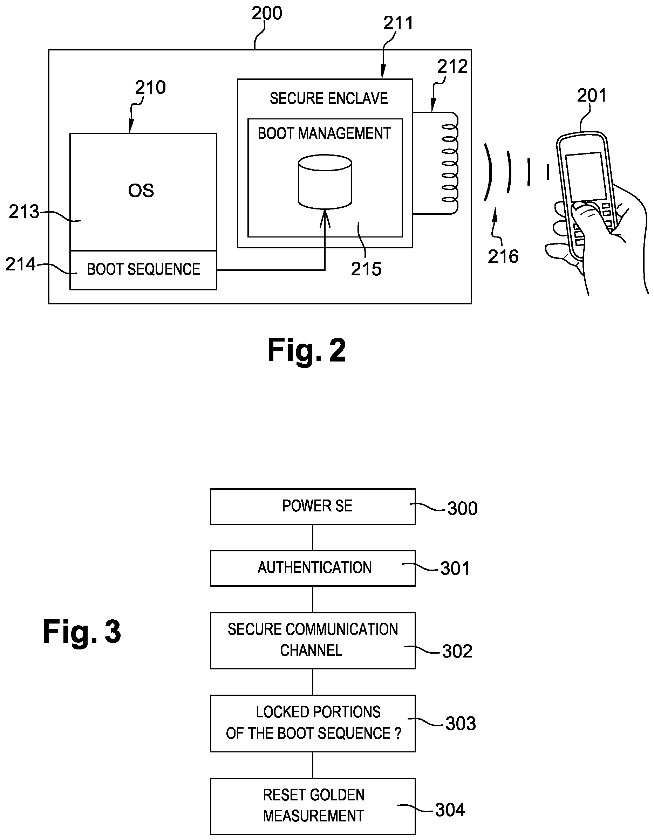

**Figure 2** schematically represents a second communication device 200 with a locked boot sequence and a first communication device that is used for the purpose of unlocking.

The second communication device 200 comprises a main processor 210 and a secure enclave 211. The secure enclave 211 is adapted to communicate wirelessly 216 with the first communication device 201 using a short-range communication technology such as Near-Field Communication (NFC), Bluetooth or Bluetooth Low Energy, this list being non limitative and provided for exemplary purpose.

The first communication device 201 is a portable device such as a smartphone, a laptop computer or a wearable device such as a smartwatch. The skilled person will understand that any portable device with communication capabilities and configured to implement the technology described in this specification can be used.

The main processor 210 implements for example an operating system 213 and a boot sequence 214. The boot sequence corresponds to a sequence of one or several portions of code that are executed when turning on the second communication device 200.

The secure enclave 211 comprises an application 215 designed for securing the execution of the boot sequence. Before executing a portion of the boot sequence, the main processor 210 requires an authorization from the secure enclave 211. For that purpose, it transmits to the secure enclave 211 using a secure channel an electronic signature derived from the portion of code before its execution by the main processor. It is then compared by the secure enclave application 215 with the reference electronic signature (golden measurement) associated to this portion of code. When it is matching, this portion of code is executed and the same process are applied on the next portion of code in the boot sequence.

When a golden measurement is not verified, that is to say when it is not matching with the electronic signature derived from the portion of the boot sequence to be executed, several alternatives can be considered.

In a first example, the boot sequence is interrupted and the second communication device is switched off. In that case, if a user tries to switch it on, the verification of the golden measurement will fails once more, the boot sequence will be once more interrupted and the second communication device switched off.

According to another example, when verifying a given golden measurement, the portion of code to which it is associated is not executed, but the other ones are considered as not compromised if their associated golden measurement is verified and they can thus be executed independently from the locked portions.

In another example, each portion of code composing the boot sequence is associated with an information representative of its criticality. If a given portion of code is indicated as having a high level of criticality, it can be considered as corrupted and as a consequence, the whole boot sequence can be locked if its associated golden measurement cannot be successfully verified. On the contrary, with a lower level of criticality, an unverified portion of code will not be executed, but this will not lock the whole boot sequence nor forbid the execution of some other portions of code.

In this description, a boot sequence is locked when at least one portion of code composing it is not executed as a consequence of an unverified golden measurement.

According to an aspect of the invention, the secure enclave 211 comprises means to communicate with the first communication device 201. For example, it comprises the needed software and hardware to implement a short range communication technology such as Near Field Communication (NFC) Bluetooth or Bluetooth Low Energy (BLE). On Figure 2, an antenna 212 is represented connected to the secure enclave 211. In an alternative embodiment, it can be integrated in the secure enclave 211.

The first communication device 201 allows an authorized user to unlock at least a portion of the boot sequence.

According to another embodiment, the first communication device 201 is adapted to communicate with the second communication device 200 in order to enable an execution of the boot sequence such that after the execution of each portion of the boot sequence, an acknowledgment is requested from the operator of the second communication device before executing the next portion of the boot sequence. This embodiment enables a step by step execution of the boot sequence.

**Figure 3** provides a diagram showing the steps for implementing a mechanism to unlock at least a portion of a boot sequence.

A first communication device is configured to communicate using a short range wireless interface with a secure enclave embedded in a second communication device. The second communication device further comprises a main processor which is configured to execute at least a portion of a boot sequence. The secure enclave implements a boot application which is configured to lock at least a portion of a boot sequence of the second communication device such that it cannot be executed when said portion is not verified. A portion of the boot sequence is considered as unverified when an electronic signature derived from said portion is not matching with a reference electronic signature to which it is associated. The reference electronic signature is memorised by the secure enclave.

According to the invention, the first communication device is configured to power 300 the secure enclave using said wireless short-range interface. The secure enclave can also be powered by other means, for example using a Universal Serial Bus (USB) interface.

It is further configured to authenticate 301 the first communication device as authorized for unlocking at least a portion of the boot sequence of the second communication device.

It is further configured to establish 302 a secure communication channel in order to exchange data with the boot application.

It is further configured to verify 303 using said communication channel if at least one portion of the boot sequence is locked.

It is further configured to transmit 304 to the secure enclave a message adapted to reset the electronic signature associated to a locked portion of the boot sequence.

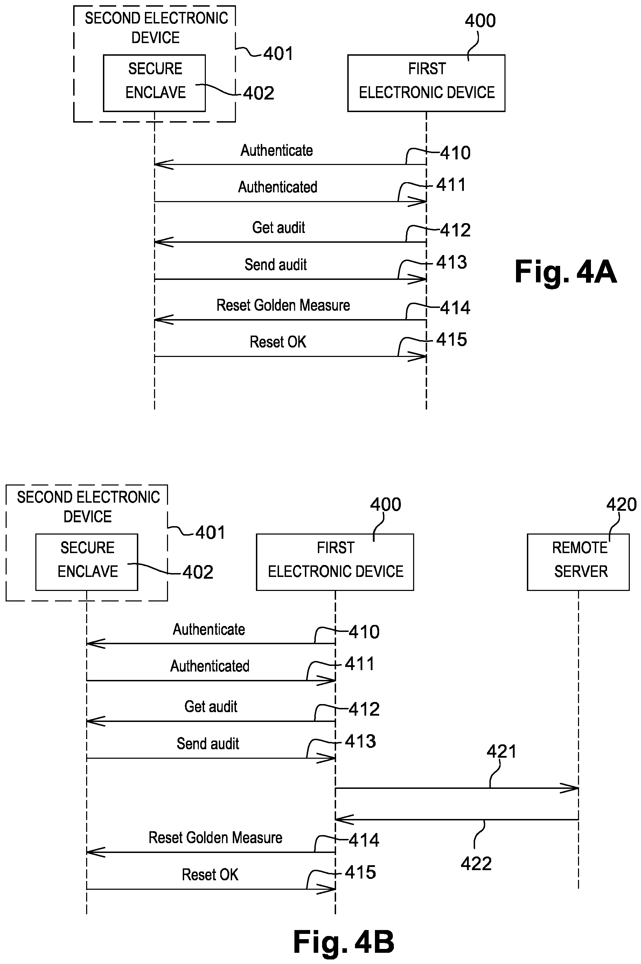

**Figure 4A** is a simplified example of a sequence diagram in which a first communication device communicates with a secure enclave embedded in a second communication device in order to unlock a boot sequence.

The unlocking of the second communication device 401 can be done only by an authorized person carrying the first communication device 400. Therefore, an authentication phase 410, 411 is needed. For that purpose, state-of-the art technologies can be used.

In a second phase, the first communication device 400 sends a request 412 to the secure enclave 402 in order to get an audit from the application managing the boot sequence. This audit is formatted and transmitted 413 by the secure enclave 402 to the first communication device 400 and corresponds for example to a report indicating the one or several portions of the boot sequence that are locked. It can also comprise some additional information such as the time and date at which a given portion of the boot sequence has been locked or any other information that may help to understand the reason that led to the locking.

According to the information contained in this audit, the operator of the first communication device 400 can decide to reset one or several of the golden measurements memorized in the secure enclave 402 in order to unlock at least in part the boot sequence. He can for that purpose use a human to machine interface provided by the first communication device. It allows to display the relevant information extracted from the audit message 413 and for the operator to decide and enter its instruction for resetting the one or several golden measu rements.

Then, an instruction message 414 is transmitted by the first communication device 400 to the secure enclave 402 of the second communication device 401 in order to reset the one or several golden measurements as indicated by the operator. This message is taken into account by the secure enclave 402 by recalculating the one or several electronic signatures, that is to say the one or several golden measurements, which are associated to the one or several portions of the boot sequence to be unlocked. Then, an acknowledgment message 415 can be transmitted to the first communication device for the operator to know that the unlocking process went well.

The second communication device can be switch on and the unlocked portions on f the boot sequence can be executed.

The ability to distinguish different portions of the boot sequence and to unlock them independently allows the operator to decide which of the portion of the boot sequence can safely unlocked. As an example, a level criticality can be attributed to each portion of the boot sequence and transmitted in the audit. The operator can then unlock one or another portion of the boot sequence knowing the implication in term of security risk.

**Figure 4B** provides another example of a sequence diagram in which second communication device communicates with a secure enclave embedded in a first communication device in order to unlock a boot sequence.

On this figure, references which are identical to figure 4A refer to the same type of messages.

According to this example, a remote server 420 provides authorization for the operator of the first communication device 400 to reset one or several golden measurements memorized by the secure enclave 402. This remote server 420 is implemented for example for the organization owning or operating a set of loT devices deployed on the field. In order to unlock a given device, the remote server cannot establish a communication link with the locked communication devices. Thanks to the invention, the organization can send an operation on site in order to unlock the communication device using a specific device, which is the first communication device 400 in this case.

For that purpose, when the operator of the first communication device is on site, and after getting the audit as previously described, said audit is transferred 421 to the remote sever 420. It can be analysed there and an authorization to unlock one or several locked portions of the second communication device can be transmitted 422 to the first communication device 400. Only the portions of the boot sequence for which an authorization has been received from the remote server 420 can be unlocked from the first communication device 400.

These authorizations can be provided by the remote server 420 at other moment and with a different strategy. For example, a list of portion of the boot sequence for which the unlocking is authorized can be transmitted to the first communication device 400 at any point in time by the remote server 420 without needing to report the audit.

## Claims

1. A first communication device (201) configured to communicate using a short range wireless interface (216) with a secure enclave (211) embedded in a second communication device (200), the second communication device (200) further comprising a main processor (210) adapted to execute at least a portion of a boot sequence (214), said secure enclave (211) implementing a boot application (215) configured to lock at least one portion of a boot sequence (214) of the second communication device (200) such that it cannot be executed when an electronic signature derived from the at least one portion is not matching with a reference electronic signature memorised by the secure enclave (211) and associated to said at least one portion, wherein the first communication device is further configured to:
- establish (302) with the secure enclave (211) a secure communication channel in order to exchange data with the boot application (215);
- receive audit data from the secure enclave (211) using said secure communication channel in order to verify (303) if at least one portion of the boot sequence is locked;
- transmit (304) to the secure enclave (211) a message for unlocking the at least one locked portion of the boot sequence, the message being taken into account by the secure enclave (211) by replacing the reference electronic signature memorized by the secure enclave by a newly generated digital signature derived from the at least one portion of the boot sequence.

2. A first communication device (201) according to claim 1 configured to power (300) the secure enclave (211) using said wireless short-range interface (216).

3. A first communication device (201) according to any of the preceding claims configured to be authenticated (301) by the secure enclave (211) as authorized for unlocking at least a portion of the boot sequence of the second communication device (200).

4. A first communication device (201) according to any of the preceding claims, configured to unlock one or several portions of the boot sequence when the boot sequence comprises a plurality of portions that are each associated to a distinct reference electronic signature.

5. A first communication device (201) according to any of the preceding claims, configured to communicate with a remote server (420), the remote server providing to the first communication device (201) an authorization to unlock one or several portions of the boot sequence, the unlocking of a portion of the boot sequence by the first communication device (201) being impossible without the authorization.

6. A first communication device according to claim 5, wherein the audit data collected from the secure enclave (211) are transferred (421) to the remote server (420) for it to decide if an authorization can be granted or not.

7. A secure enclave (211) configured to be embedded in a second communication device (200) and to communicate using a short range wireless interface (216) with a first communication device (201), the second communication device (200) further comprising a main processor (210) adapted to execute at least a portion of a boot sequence (214), said secure enclave (211) implementing a boot application (215) configured to lock at least one portion of a boot sequence (214) of the second communication device (200) such that it cannot be executed when an electronic signature derived from the at least one portion is not matching with a reference electronic signature memorised by the secure enclave (211) and associated to said at least one portion, wherein the secure enclave (211) is further configured to:
- establish (302) a secure communication channel in order to exchange data between the first communication device (201) and the boot application (215);
- transmit (303, 413) to the first communication device (201) using said secure communication channel audit data indicating if at least one portion of the boot sequence is locked;
- receive (304) from the first communication device (201) a message for unlocking the at least one locked portion of the boot sequence, the message being taken into account by the secure enclave (211) by replacing the reference electronic signature memorized by the secure enclave (211) by a newly generated digital signature derived from the at least one portion of the boot sequence.

8. The secure enclave according to claim 7 embedding an antenna adapted to implement the short range wireless interface (216).

9. The secure enclave (211) according to any of claims 7 or 8 memorizing for each portion of code composing the boot sequence a data item representative of its criticality in order to show at least two levels of criticality, the first level corresponding to a high level of criticality and the second level to a low level of criticality.

10. The secure enclave (211) according to claim 9, configured such that if a given portion of the boot sequence associated a high level of criticality is locked, the whole boot sequence is locked.

11. The secure enclave (211) according to any of claims 9 to 10, configured such that if a given portion of the boot sequence associated a low level of criticality is locked, the other portions of the boot sequence can still be executed if those are unlocked.

12. The secure enclave (211) according to any of claims 7 to 11, wherein the audit data comprises, in addition to an information indicating if at least one portion of the boot sequence is locked, additional information among which the time or date at which a given portion of the boot sequence has been locked.

13. The secure enclave (211) according to any of claims 7 to 12 configured to be powered (300) by the secure enclave (211) using said wireless short-range interface (216).

14. The secure enclave (211) according to any of claims 7 to 13, configured to authenticate (301) the first communication device (201) as authorized for unlocking at least a portion of the boot sequence of the second communication device (200).

15. A method for unlocking the boor sequence of a second communication device (200) by a first communication device (201), the first communication device (201) being configured to communicate using a short range wireless interface (216) with a secure enclave (211) embedded in the second communication device (200), the second communication device (200) further comprising a main processor (210) adapted to execute at least a portion of a boot sequence (214), said secure enclave (211) implementing a boot application (215) configured to lock at least one portion of a boot sequence (214) of the second communication device (200) such that it cannot be executed when an electronic signature derived from the at least one portion is not matching with a reference electronic signature memorised by the secure enclave (211) and associated to said at least one portion, wherein the method comprises the steps of:
- establishing (302) with the secure enclave (211) a secure communication channel in order to exchange data with the boot application (215);
- receiving audit data from the secure enclave (211) using said secure communication channel in order to verify (303) if at least one portion of the boot sequence is locked;
- transmitting (304) to the secure enclave (211) a message for unlocking the at least one locked portion of the boot sequence, the message being taken into account by the secure enclave (211) by replacing the reference electronic signature memorized by the secure enclave by a newly generated digital signature derived from the at least one portion of the boot sequence.

16. The method according to claim 15, comprising the step of receiving from a remote server (420) an authorization to unlock one or several portions of the boot sequence, the unlocking of a portion of the boot sequence by the first communication device (201) being impossible without said authorization.

17. A computer program product comprising instructions which, when the program is executed by a computer, cause the computer to carry out the steps of the method of any of claims 15 to 16.
